# EUROPEAN PATENT APPLICATION

(11) **EP 4 670 959 A1**
(43) Date of publication of application: **31.12.2025**
(21) Application number: 24185332.4
(22) Date of filing: 28.06.2024
(51) Int. Cl.: B32B 5/26, B32B 5/24, B32B 7/05

(54) **WELDED TEXTILE COMPOSITE MATERIAL FOR THE USE IN PERSONAL PROTECTIVE GARMENT AND A METHOD FOR ITS MANUFACTURE**

(71) Applicant: Lenzing Aktiengesellschaft, 4860 Lenzing (AT)
(72) Inventor: Gstettner, Alexander, 4661 Roitham (AT)
(74) Representative: Global Patent Management Lenzing AG

(57) **Abstract**

This invention relates to a textile composite material, such as a thermal liner composite layer, for the application in textiles, in particular in personal protective garment, for the protection against heat, flames, electric arc and other threats for the health, well-being and performance of human beings. It comprises at least a frontside layer, a thermal insulation layer and a backside layer and these three layers are attached together by plastic welding. In particular the thermal liner composite layer according to the invention shall be used to protect fire-fighters, industrial workers, etc. against the threats mentioned above. Furthermore the invention relates to a method for the manufacture of this textile composite material.

## Description

This invention relates to a textile composite material, such as a thermal liner composite layer, for the application in textiles, in particular in personal protective garment, for the protection against heat, flames, electric arc and other threats for the health, well-being and performance of human beings. It comprises at least a frontside layer, a thermal insulation layer and a backside layer and these three layers are attached together by plastic welding. In particular the thermal liner composite layer according to the invention shall be used to protect fire-fighters, industrial workers, etc. against the threats mentioned above. Furthermore the invention relates to a method for the manufacture of this textile composite material.

### Prior Art

Composite materials for textile use are generally known since long. In particular thermal insulation textiles, containing an outer layer (towards the environment), an inner layer (towards the body of the wearer) and an inner filler layer for insulation between the two other layers, are very common and widely used all over the world. The inner layer may be only loosely arranged, fixed only at the edges of the garment by sewing. In many cases it is, however, fixed to one or both other layers by quilting. Typical inner layers are non-wovens or waddings consisting of fibers or filaments of natural or artificial materials, but also other natural materials like feathers, downs, fur and others.

Usually the quilting is realized by sewing. But recently another technique gains growing importance that consists in melting the different layers together by a technology named "embossing". Embossing means that the combined layers are pressed by a heated roller with a structured surface. The surface is so hot that it causes the layers to melt locally and to fuse together. After the compound formed by the layers has left the pressing area of the embossing roller, it cools down and solidifies. The result is a connection between the layers similar to a seam made by sewing and the material is a quilted material. Embossing is cheaper than sewing and the specific look it creates is appreciated by many end consumers. It is for example used for home textile, winter garment, fashion garment etc.. However, this type of textile processing requires that all layers consist of thermoplastic materials. Otherwise they will not or not sufficiently fuse together and the interconnection will not be durable. But personal protective textiles inherently must contain layers that are not or not completely thermoplastic, such as fibers or filaments consisting of aramid, wool, cellulose or flame-resistant ("FR") cellulose or flame-retardant treated cellulosic fabrics.

Protective clothing against thermal hazards is used globally in hot working conditions, but also in hot and humid climate conditions such as tropical or sub-tropical regions. In order to prevent and reduce heat stress for the protective clothing user the materials have to be as light as possible but still offering highest protection values. Textiles and garments used for such applications are usually certified according to European and/or international standards such as EN, ISO or NFPA.

State of the art quilted lining materials are using FR aramid fibers either in form of needle punch or spunlace material. Especially spunlace materials are extremely flat due to the water entanglement process. Manufacturers implement 3D structures to compensate this flattening effect. Conventional fleece material of aramid fibers are limited in weight and volume ratio.

Synthetic fibers like polyester (PES) are lightweight and can be used in very lightweight high loft non-woven materials. Fabric weights below 20gsm are possible. PES fibers are highly flammable and are melting, hence they cannot be used in direct applications next to skin in personal protective clothing.

Another option is to use lightweight very open foam materials, for instance polyurethane foams. Such foams are e.g. those used for water filtration. They have the advantage of letting liquid water pass through the structure and do not absorb or hold liquid water in the structure. Same as PES high loft non-woven materials such foams are highly flammable and are melting. They cannot be used in direct applications next to skin in personal protective clothing.

### Problem

In view of this prior art the problem to be solved consisted in providing a composite material containing non-thermoplastic layers that fulfils all needs for personal protective textiles for protection against heat, flames, electric arc that can be manufactured in a more economical way. The problem further consisted in providing a more economical technology for its manufacture.

### Description

It is therefore an object of the present invention to provide a textile composite material, preferably for the use in personal protective garment, comprising at least a frontside layer, a thermal insulation layer and a backside layer, wherein these three layers are attached together by plastic welding, characterized in that the thermal insulation layer contains thermoplastic material and that one or both of the frontside layer and the backside layer consist mainly or completely of non-thermoplastic fibers.

In a preferred embodiment both of the frontside layer and the backside layer consist completely of non-thermoplastic fibers. However, depending on the specific use area of a personal protective garment those layers may contain a certain amount of thermoplastic fibers.

Surprisingly it was found that a combination of flame resistant textile fabrics and thermoplastic intermediate layer either of thermoplastic high loft synthetic fibers or foam material with open structure can be combined with plastic welding methods like heat embossing or ultrasonic welding. Due to the non-thermoplastic outer layers the intermediate layer can be molten with high temperatures compared to layer assemblies used for fashion or sports garments consisting of melting synthetic fibers in all layers.

The subject matter of the present invention provides high protection at low weight with high volume.

In a preferred embodiment of the present invention the total mass per area weight of the textile composite material is between 100 and 350 gsm, preferably between 125 and 300 gsm, more preferably between 125 and 280 gsm. Thinner materials are technically not possible if they should fulfil the standards for personal protective equipment. Thicker materials would result in garments that are too heavy to wear by persons that have to work physically, like fire-fighters, electricians or people working with molten metals, like at blast furnaces.

Preferably the frontside layer and the backside layer of the textile composite material contain from 0 and 15%, preferably between 0 and 10%, more preferably between 0 and 5% of thermoplastic fibers. With such quantities of thermoplastic fibers the outside layers may still fulfill the requirements for protective clothing. However, the smaller the thermoplastic fiber content in these layers, the higher usually will be the protective effect.

The mass per area weight of each of the outside layers preferably is between 40 and 200 gsm, more preferably between 40 and 150gsm. "Outside layer" means the frontside layer and the backside layer. Mass per area weights of between 40 and 60 gsm for the uses according to this invention are only possible with nonwoven fabrics. In case an outside layer is a woven fabric then the minimum mass per area weight will be 60gsm. Thinner fabrics will not fulfill the protection requirements requested for use in personal protective garments.

The non-thermoplastic fibers of the textile composite material are chosen from the group containing FR-viscose (available e.g. under LENZING^{™} FR from Lenzing AG, Lenzing, Austria), aramid, modacrylic, PBI (polybenzimidazole), PBO (polybenzoxazole) and melamine resin fibers as well as blends of those fibers with cotton, hemp, linen, modal, lyocell and/or wool. The term aramid shall include p-aramid, m-aramid as well as non-thermoplastic aromatic polyesters. Other possible fiber types are e.g. cured phenol-aldehyde fibers like Kynol^{®} Novoloid fibers and engineered acrylic fibers like Pyrotex^{®}. Possible thermoplastic fibers may be aliphatic polyesters (such as polyethylene terephthalate), polyamides (such as PA6 or PA6,6) or polyacrylates. "Fibers" for the purposes of the invention shall include staple fibers as well as filaments. The yarns that include those fibers may consist of only one fiber type, of blends of more than one of the above-mentioned fiber types and also may be so-called core-yarns containing filaments as well as staple fibers. The fabrics forming the outside layers, i.e. the frontside layer and the backside layer, may be woven, knitted or nonwoven fabrics. Due to the required mechanical properties nonwovens preferably are spunlaced nonwovens.

In particular embodiments of the present invention the plastic welding of the textile composite material may be in particular either embossing or ultra sonic welding.

Furthermore, in particular embodiments of the present invention the thermal insulation layer within the textile composite material may consist of a nonwoven or foam material. While the thermal insulation layer itself according to the invention is thermoplastic, it must withstand at least 180°C in the oven test, in order to contribute to the fulfilling of the standard requirements for personal protective garment. However, in order to allow the plastic welding according to the invention it must show a melting point of between 185 and 205°C, preferable of between 190 and 200°C. Lower melting points would result in failure in the protective garment tests and higher melting points would not allow a feasible plastic welding in the manufacture of the composite material. The thermal insulation layer may be constructed out of nonwoven with a certain amount of thermoplastic synthetic fibers, due to the melting of synthetic fibers.

The thermal insulation layer within the textile composite material may consist of a nonwoven with a thickness of between 1 and 8mm, preferably between 2 and 7mm. Thinner materials would not be able to fulfil the standards for personal protective equipment. Thicker materials would result in garments that are too heavy, thick and stiff to wear by persons that have to work physically. The nonwoven may contain chemical binders or be mechanically bonded, preferably by spunbonding or needlepunching. The nonwoven thermal insulation layer may be made by meltblowing or electrospinning. Also combinations of the techniques mentioned before are possible. The frontside layer 1 and backside layer 3 are bonded together with thermal insulation layer 2, according to the pattern caused by the plastic welding method. E.g. by embossing the pattern will be according to the surface structure of the embossing roller used.

A further option is the usage of membranes in one of the layers, either on the outside of the frontside layer or on the innermost side of the backside layer of the composite. Preferably an outer layer of the textile composite material further contains a membrane on its outer side. The membrane type can be chosen according to the kind of protection it should provide. Mostly this will be protection against weather (i.e. water, wind, etc.) and/or against chemicals. PTFE (polytetrafluoroethylene) but also polyurethane membranes are available with suitably high melting points; they can withstand both the heat embossing or ultrasonic process. It is only possible to place the membrane on an outside of the textile composite material according to the invention. In this arrangement the welding of the layers works well because the welding heat can go through the membrane. If the membrane would be placed on the inner side of the respective outer layer, i.e. between the outer layer and the thermal insulation layer, the melting thermoplastic material of the insulation layer would not be able to penetrate into the outer layer as it cannot pass the membrane. The result of this innovation is a multi-layer laminate which cannot be produced with conventional quilting techniques because the needles for the quilting would damage the membrane. The corresponding product can also be used in conjunction with another outer-shell fabric, whereas the side with the membrane will be inside of the textile assembly.

Another aspect of the present invention is a method for attaching three or even more layers of textile materials by plastic welding, in order to produce a textile composite material, preferably for the use in personal protective garment, wherein the inner layer contains thermoplastic material and that one or both of the frontside layer and the backside layer consist mainly or completely of non-thermoplastic fibers and that the welding conditions are controlled in a manner sufficient to induce a flow of the thermoplastic material into the structure of both non-thermoplastic fabrics. Welding conditions here mean e.g. welding tool surface characteristics, contact time and surface temperature.

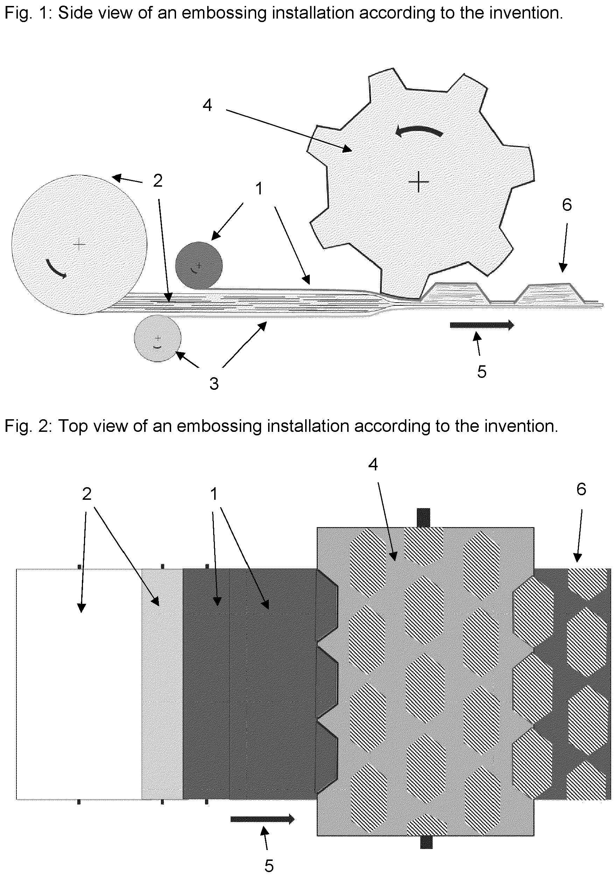

In a preferred embodiment of the present invention the plastic welding method is embossing. In embossing the combined outside and thermal insulation layers are guided through a calender where the welding is caused by a heated embossing roller with a structured surface (see (4) in Fig. 1 and Fig. 2).

For the purposes of the present invention the embossing roller surface has a temperature of between 210 to 230°C, preferably of between 215 to 225°C. The speed at which the material passes the embossing roller is preferably about 5 - 8m/min in order to achieve a contact time between embossing roller surface and material of between 0.1 to 1.0 sec. The width of the weld seam, i.e. the area where the molten material of the thermal insulation layer has penetrated the outside layer material, should be about 1 to 3 mm. This is a good compromise between stability of the weld seam and flexibility of the final composite material. The surface structure of the embossing roller will be chosen suitable to obtain this width. The pressure applied by the embossing roller to the material may depend on many factors, such as thickness and further properties of the specific composition of the composite material. However, an experienced operator of an embossing line will be able to find the right settings, based on the parameters given above according to the invention.

In another preferred embodiment of the present invention the plastic welding method is ultrasonic welding. In ultrasonic welding the ultrasonic heads have to be designed and set in a suitable manner to obtain a final composite material as outlined above.

### Brief description of the drawings:

Fig. 1 shows a possible embodiment of the invention with the side view of an embossing installation according to the invention with the cover layer 1, the filler layer 2, the backside layer 3, the heated embossing roller 4, the machine direction 5 of the composite material and the embossed composite material 6.
Fig. 2 shows the same embodiment of the invention as Fig. 1 with the top view of an embossing installation according to the invention with the cover layer 1, the filler layer 2, the heated embossing roller 4, the machine direction 5 of the composite material and the embossed composite material 6. The backside layer 3 is not visible in this top view.

The invention will now be illustrated by examples. These examples are not limiting the scope of the invention in any way. The invention includes also any other embodiments which are based on the same inventive concept. All percentage values in this whole patent description are always weight-%.

### Examples

Table 1 shows 5 composite materials according to the inventive concept. All of them fulfill the requirements of e.g. EN ISO certifications like EN 469:2020 (protective clothing for fire fighters), EN ISO 11612:2015 (protective clothing against heat and flame) or EN ISO 11611:2015 (protective clothing for welders).

### Example 1:

Composite material 1 (according to Table 1) was compared to two state-of-the-art single-layer comparison fabrics of similar total mass per area weights in view of the requirements according to EN 469:2020 (Fire Fighter Protective Clothing). The results are shown in Table 2.

Comparison fabric 1: 93% meta-aramid/ 5% para-aramid /2% antistatic fabric, 150gsm twill 2/1, color: Navy blue.

Comparison fabric 2: 50% meta-aramid / 50% viscose FR fabric, 180gsm twill 2/1, color: Navy blue.

**Table 2: Results for Example 1:**

| Fabric | total mass per area weight [g/m²] | RHTI 24 radiant heat protection [sec] | HTI 24 convective heat protection [sec] |
|---|---|---|---|
| Composite material 1 | 140 | 6,1 | 5,8 |
| Comparison fabric 1 | 150 | 3,5 | 2,9 |
| Comparison fabric 2 | 180 | 3,4 | 3,1 |

Despite the composite material 1 (according to the invention) has been the lightest combination, thermal protective values are almost doubled compared to the comparison single layer fabrics.

### Example 2:

Composite material 3 (according to Table 1) was compared to three state-of-the-art single-layer comparison fabrics of similar total area weights in view of the requirements according to EN IEC 61482 1-1:2020 (open arc flash). The results are shown in Table 3.
Comparison Fabric 3: 93% meta-aramid/ 5% para-aramid /2% antistatic fabric, 220gsm twill 2/1, color: Navy blue
Comparison Fabric 4: 50% meta-aramid / 50% viscose FR fabric, 240gsm twill 2/1, color: Navy blue
Comparison Fabric 5: 55% Modacrylic / 45% cotton fabric, 260gsm twill 2/1, color: Navy blue

**Table 3: Results for Example 2:**

| Fabric | total mass per area weight [g/m²] | ATPV [cal] |
|---|---|---|
| Composite material 3 | 240 | 15,3 |
| Comparison fabric 3 | 220 | 8,5 |
| Comparison fabric 4 | 240 | 8,9 |
| Comparison fabric 5 | 260 | 8,1 |

Results of composite material 3 have been significantly higher (almost doubled), compared to the single layer fabric solutions with similar or even higher weights.

**Table 1**

| Composite material | | Frontside layer | Insulation layer | Backside layer | Total weight | Total thickness |
|---|---|---|---|---|---|---|
| 1 | Material | Spunlace 100% Aramid | Filler Layer 100% PES | 3D Spunlace 60/40% LENZING^{™} FR/ Aramid | 140gsm | 6,2mm |
| | Weight | 40gsm | 20gsm | 80gsm | | |
| | Thickness | 1mm | 4mm | 1,2mm | | |
| 2 | Material | Woven Fabric 100% Aramid | Filler Layer 100% PES | 3D Spunlace 60/40% LENZING^{™} FR/ Aramid | 160gsm | 6,2mm |
| | Weight | 60gsm | 20gsm | 80gsm | | |
| | Thickness | 1mm | 4mm | 1,2mm | | |
| 3 | Material | Woven Fabric 65/35% LENZING^{™} FR/ Aramid | Filler Layer 100% PES | Woven Fabric 50/50% LENZING^{™} FR/ Aramid | 240gsm | 7,2mm |
| | Weight | 90gsm | 30gsm | 120gsm | | |
| | Thickness | 1mm | 5mm | 1,2mm | | |
| 4 | Material | Knitted Fabric 50/50% LENZING^{™} FR/ Aramid | Filler Layer 100% PES | Knitted Fabric 50/50% LENZING^{™} FR/ Aramid | 230gsm | 7,0mm |
| | Weight | 100gsm | 30gsm | 100gsm | | |
| | Thickness | 1mm | 5mm | 1mm | | |
| 5 | Material | Woven Fabric 50/50% LENZING^{™} FR/ Aramid | Filler Layer PU FOAM | Spunlace 100% Aramid | 260gsm | 7,2mm |
| | Weight | 120gsm | 100gsm | 40gsm | | |
| | Thickness | 1mm | 5mm | 1,2mm | | |
| 6 | Material | Woven Fabric 50/505 LENZING^{™} FR/ Aramid | Filler Layer PU FOAM | Spunlace 100% Aramid + PU Membrane (Membrane to outside direction) | 280gsm | 7,2mm |
| | Weight | 160gsm | 100gsm | 60gsm | | |
| | Thickness | 1mm | 5mm | 1,2mm | | |

## Claims

1. Textile composite material, preferably for the use in personal protective garment, comprising at least a frontside layer, a thermal insulation layer and a backside layer, wherein these three layers are attached together by plastic welding, **characterized in that** the thermal insulation layer contains thermoplastic material and that one or both of the frontside layer and the backside layer consist mainly or completely of non-thermoplastic fibers.

2. Textile composite material according to claim 1, wherein its total mass per area weight is between 100 and 350 gsm, preferably between 125 and 300 gsm, more preferably between 125 and 280 gsm.

3. Textile composite material according to claim 1, wherein the frontside layer and the backside layer contain from 0 to 15%, preferably between 0 and 10%, more preferably between 0 and 5% of thermoplastic fibers.

4. Textile composite material according to claim 1, wherein the total mass per area weight of each of the outside layers is between 40 and 200 gsm, preferably between 40 and 150gsm.

5. Textile composite material according to claim 1, wherein the non-thermoplastic fibers are chosen from the group containing FR-viscose, aramid, modacrylic, PBI ("polybenzimidazole"), PBO ("polybenzoxazole") and melamine resin fibers as well as blends of those fibers with cotton, hemp, linen, modal, lyocell and/or wool.

6. Textile composite material according to claim 1, wherein the plastic welding may be in particular either embossing or ultra sonic welding.

7. Textile composite material according to claim 1, wherein the thermal insulation layer may consist of a nonwoven or foam material.

8. Textile composite material according to claim 7, wherein the thermal insulation layer may consist of a nonwoven with a thickness of between 1 and 8mm, preferably between 2 and 7mm.

9. Textile composite material according to claim 1, wherein an outer layer further contains a membrane on its outer side.

10. Method for attaching three or more layers of textile materials by plastic welding, in order to produce a textile composite material, preferably for the use in personal protective garment, **characterized in that** the inner layer contains thermoplastic material and that one or both of the frontside layer and the backside layer consist mainly or completely of non-thermoplastic fibers and that the welding conditions are controlled in a manner sufficient to induce a flow of the thermoplastic material into the structure of both non-thermoplastic fabrics.

11. Method according to claim 10, wherein the plastic welding method is embossing.

12. Method according to claim 10, wherein the plastic welding method is ultrasonic welding.
